# EUROPÄISCHE PATENTANMELDUNG

(11) **EP 2 014 416 A1**
(43) Veröffentlichungstag der Anmeldung: **14.01.2009**
(21) Anmeldenummer: 07109835.4
(22) Anmeldetag: 08.06.2007
(51) Int. Cl.: B24C 9/00, B07B 13/00

(54) **Verfahren und eine Vorrichtung zum Trennen von Anteilen in einem Schüttgut**

(71) Anmelder: Georg Fischer Automobilguss GmbH, 78224 Singen (DE)
(72) Erfinder: Piel, Wolfgang, 78259 Mühlhausen-Ehingen (DE)
(74) Vertreter: Weiss, Wolfgang

(57) **Zusammenfassung**

Die Erfindung betrifft ein Verfahren und eine Vorrichtung zum Trennen von Anteilen (1, 2) in einem Schüttgut, wobei die jeweiligen Anteile (1, 2) ein unterschiedliches Elastizitätsmodul aufweisen. Das Schüttgutanteile (1, 2) aufweisende Schüttgutgemisch wird über eine schiefe Ebene (3) infolge der Schwerkraft geführt und die Schüttgutanteile (1, 2) werden aufgrund ihres unterschiedlichen Elastizitätsmoduls an einer feststehenden Prallplatte (4) unterschiedlich in Richtung der Winkel (β, α) abgelenkt.

## Beschreibung

Die Erfindung betrifft Verfahren und eine Vorrichtung zum Trennen von Anteilen in einem Schüttgut. Die jeweiligen Anteile weisen ein unterschiedliches Elastizitätsmodul auf.

Es ist allgemein bekannt, Gussteile, etwa Rohlinge, die in Sandformen gefertigt worden sind, nach ihrem Erkalten einer reinigenden Behandlung zu unterziehen, wobei die Oberfläche der einzelnen Gussteile mittels eines Sandstrahlgebläses mit Schleifmittel beaufschlagt wird. Als Schleif- bzw. Strahlmittel wird gewöhnlich Quarzsand oder ein anderer mineralischer Sand verwendet. Weiterhin ist bekannt als Strahlmittel metallisches Material, beispielsweise körniges Eisen oder Stahl zu verwenden. Die Reinigung der an ihrer Oberfläche mit Verunreinigungen behafteten Gussteile erfolgt in einer Strahlkammer.

Es besteht die Notwendigkeit die verhältnismässig teuren metallischen Strahlmittel so weit wie möglich für eine Wiederverwendung zurück zu gewinnen. Es sind in diesem Zusammenhang Trennverfahren bekannt geworden, die zwar einen Grossteil des magnetisierbaren Strahlmittels von den nicht magnetisierbaren Verunreinigungen trennen.

In der DE PS 806422 ist eine Reinigung für Sandstrahlzwecke verwendeten Mitteln offenbart. Das zu reinigende Mittel wird in einem Strom mit einer gewissen Geschwindigkeit mitgeführt, wobei das Mittel auf einen eine andere Richtung besitzenden Luftstrom auftrifft, welcher durch den ersteren Strom hindurch tritt und in seiner Stärke so gewählt ist, dass Verunreinigungen mit einer Partikelgrösse und einem Gewicht unterhalb der Partikelgrösse und des Gewichtes des Strahlmittels dem Luftstrom folgen und durch denselben aus dem Strom des Strahlmittels herausgeführt werden, welcher in gereinigtem Zustand seinen Weg fortsetzt.

Ein Verfahren zum Abputzen von Gussteilen und Vorrichtung zur Durchführung des Verfahrens beschreibt die Auslegeschrift DE AS 1508987. Die in einer Strahlkammer durch mechanische Vorreinigung der Gussteile anfallenden Verunreinigungen werden in bekannter Weise über eine Siebtrommel und einen Magnetabscheider in eine Scheidekammer befördert und hier über eine in Offenstellung umgelegte Leitklappe direkt aus dem Strahlmittelkreislauf ausgeworfen. Nach beendeter Vorreinigung und Umlegen der Leitlklappe wird während der Beaufschlagung der Gussteile mit magnetisierbarem Strahlmittel das einmal anfallende Abriebgemisch körnig in gleicher Weise in die Scheidekammer befördert, wobei der nicht magnetisierbare Anteil über die Leitklappe zu einer geschlossenen Austrittsöffnung gelangt und oberhalb dieser in dem Behälterabschnitt gesammelt wird, wohingegen der magnetisierbare Anteil über einen anderen Auslass aus der Scheidekammer ausgetragen und im Strahlmittelkreislauf verbleibend während des Strahlvorganges innerhalb der Strahlkammer in bekannter Weise über einen pneumatischen Abscheider in die Strahlkammer zurückgeführt wird.

Der Erfindung liegt die Aufgabe zugrunde, ein einfaches Verfahren und eine einfache Vorrichtung zur Rückgewinnung von wieder verwertbarem Schüttgut zu schaffen.

Die Lösung der Aufgabe wird erfindungsgemäss dadurch gelöst, dass das die Schüttgutanteile aufweisende Schüttgutgemisch über eine schiefe Ebene infolge der Schwerkraft geführt wird und die Schüttgutanteile aufgrund ihres unterschiedlichen Elastizitätsmoduls an einer feststehenden Prallplatte unterschiedlich abgelenkt werden.

Das Prinzip der Trennung von Teilchen mit verschiedenem Elastizitätsmodul besteht im unterschiedlichen Stossverhalten beim Auftreffen auf eine Wand (hier Prallwand) unter einem bestimmten Winkel. Das Teilchen mit hohem elastischen Elastizitätsmodul wird unter einem grösseren Winkel (gebildet aus der Normalen der Prallplatte und dem Einfallswinkel der Strahlrichtung) zurückgestossen als ein Teilchen mit kleinerem Elastizitätsmodul. Der ideale elastische Stoss ist bekanntlich Einfallswinkel gleich Ausfallswinkel. Diese Tatsache wird bei der Trennung ausgenutzt, wenn das Schüttgut aus Teilchen mit verschiedenem Elastizitätsmodul besteht.

Somit lässt sich erfindungsgemäss in einfacher Weise ein abgetrennter Schüttgutanteil zur Wiederverwendung sammeln.

Bevorzugt ist das Verfahren auf ein Schüttgut als Strahlmittel zur Behandlung von Gussteilen anwendbar, insbesondere wenn das Strahlmittel aus Sand- und Stahlkörnern zusammengesetzt ist.

Gemäss einer bevorzugten Ausführungsform besteht die Vorrichtung nach dem oben beschriebenen Verfahren aus einer schiefen Ebene zur Führung des Schüttgutes, einer Prallplatte zum Trennen des Schüttgutes und mindestens zwei Sammelbehältern zum Sammeln der Schüttgutanteile.

Das erfindungsgemässe Verfahren und die erfindungsgemässe Vorrichtung sind beispielhaft in den Zeichnungen dargestellt. Es zeigen:
Fig. 1 das Prinzip des erfindungsgemässen Trennungsverfahrens
Fig.2 ein Ausführungsbeispiel einer Vorrichtung für Sandstrahlmittel

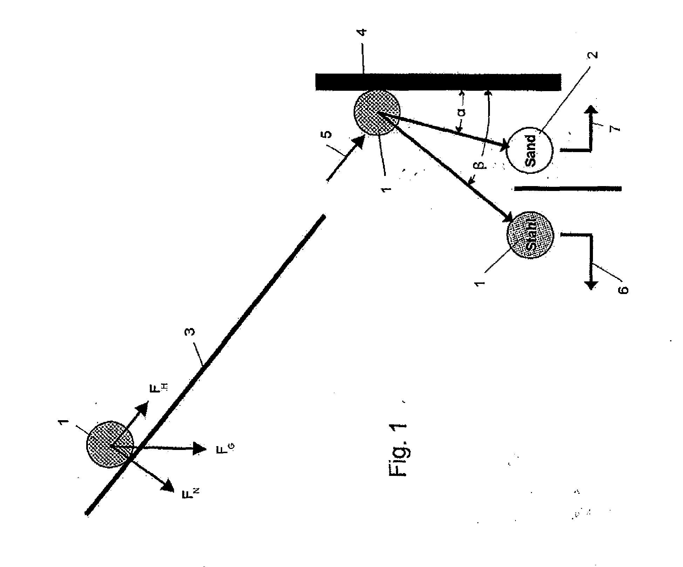

Die Fig. 1 zeigt das physikalische Prinzip des Trennverfahrens eines Schüttgutes, bestehend aus zwei Komponenten, z.B. ein Gemisch aus Stahlkugeln 1 mit hohem Elastizitätsmodul und aus Sandkörnern 2 mit einem kleineren Elastizitätsmodul als das der Stahlkugeln 1.

Das Schüttgutgemisch aus Stahlkugeln 1 und Sandkörnern 2 gelangt auf der schiefen Ebene 3 in Aufprallrichtung 5 gegen die Prallwand 4. In Fig.1 ist nur beispielhaft eine Stahlkugel 1 mit den üblichen Kräften F_{H} als Hangabtriebskraft, F_{G} als Gewichtskraft und als Normalkraft gezeigt. Bekanntlich hat Stahl ein höheres Elastizitätsmodul als Sand, so dass aufgrund des unterschiedlichen Impulses die Stahlkugeln 1 unter einem grösseren Abprallwinkel β (nahezu elastischer Stoss) als die Sandkörner 2, die unter einem kleineren Winkel α abprallen (plastischer Stoss). Aufgrund der unterschiedlichen Abprallrichtung können die Schüttgutkomponenten 1 oder 2 entweder in den Prozess in Richtung 6 zurückgeführt oder als Schutt in Richtung 7 abgeführt werden.

Dieses allgemeine Trennverfahren ist auf alle Schüttgüter mit Anteilen mit verschiedenem Elastizitätsmodul anwendbar.

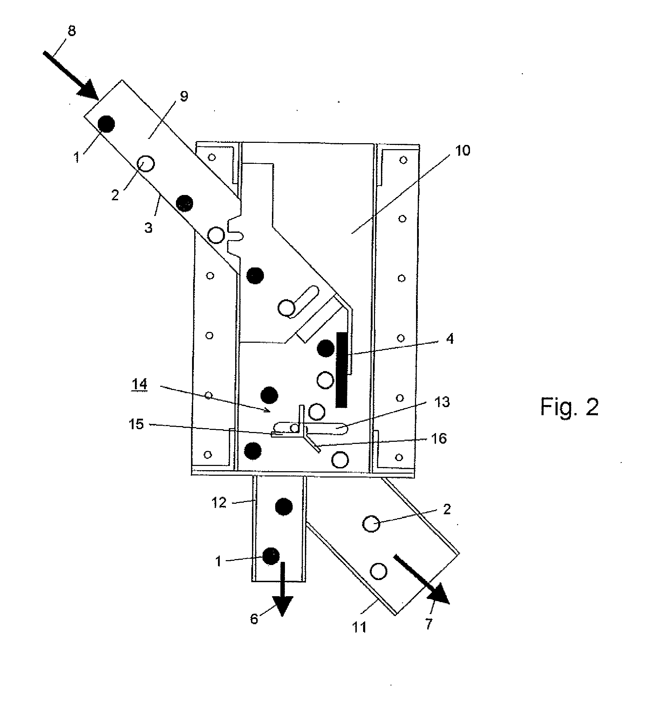

In der Fig. 2 ist als Ausführungsbeispiel eine Anwendung für das Strahlen von Gussteilen mittels eines Strahlmittels mit Stahlkugelanteilen gezeigt.

Nach dem Strahlen der Gussteile gelangt das Strahlmittel in bekannter Weise durch eine Magnettrommel (nicht gezeigt) und anschliessend durch eine Windsichtung (nicht gezeigt). Zur Rückgewinnung der wieder verwendbaren Stahlkugeln wird dann erfindungsgemäss das Strahlmittel in Richtung 8 in ein eine schiefe Ebene 3 bildendes Rohr 9 geleitet. Das Rohr 9 führt in eine Kammer 10. Das aus einem Gemisch aus Stahlkugeln 1 und Sandkörnern 2 bestehende Schüttgut prallt nach dem Auslauf des Rohres 9 gegen eine in der Kammer 10 befindliche Prallplatte 4. Wie in Fig. 2 zu sehen, werden die Stahlkugeln 1 infolge des elastischen Stosses weiter abgelenkt als die Sandkörner 2, bei denen ein plastischer Stoss erfolgt.

Vorzugsweise kann in der Kammer 10 eine Ablenkvorrichtung 14 vorgesehen sein. Die Ablenkvorrichtung 14 besteht aus einem Schlitz 13, in dem Bleche 15, 16 verschieb- und/oder drehbar zur Anpassung an die jeweiligen Abprallwinkel der Strahlmittelkomponenten 1, 2 angeordnet sind.

Unterhalb der Kammer 10 können Abführungsrohre 11, 12 zum Ableiten der getrennten Strahlmittlanteile 1, 2 zur Wiederverwendung oder zum Abfall angeordnet sein.

Die mit der Erfindung verbundenen Vorteile liegen insbesondere darin, dass in einfacher Weise ohne grossen materiellen Aufwand Trennung von Schüttgutanteilen durchgeführt werden können.

### Bezugszeichenliste

- 1: Stahlkugeln
- 2: Sandkörner
- 3: Schiefe Ebene
- 4: Prallwand
- 5: Aufprallrichtung
- 6: Rückführung zum Strahlmittel
- 7: Ableitung zum Schutt
- 8: Einlaufrichtung
- 9: Rohr
- 10: Kammer
- 11: Rohr
- 12: Rohr
- 13: Schlitz
- 14: Ablenkvorrichtung
- 15: Blech
- 16: Blech
- F_{H}: Hangabtriebskraft
- F_{G}: Gewichtskraft
- F_{N}: Normalkraft

- α: Abprallwinkel von 2
- β: Abprallwinkel von 1

## Patentansprüche

1. Verfahren zum Trennen von Anteilen (1, 2) in einem Schüttgut, wobei die jeweiligen Anteile (1, 2) ein unterschiedliches Elastizitätsmodul aufweisen, **dadurch gekennzeichnet, dass** das die Schüttgutanteile (1, 2) aufweisende Schüttgutgemisch über eine schiefe Ebene (3) infolge der Schwerkraft geführt wird und die Schüttgutanteile (1, 2) aufgrund ihres unterschiedlichen Elastizitätsmoduls an einer feststehenden Prallplatte (4) unterschiedlich in Richtung der Winkel (β, α) abgelenkt werden.

2. Verfahren nach Anspruch 1, **dadurch gekennzeichnet, dass** mindestens ein abgetrennter Schüttgutanteil (1) zur Wiederverwendung gesammelt wird.

3. Verfahren nach Anspruch 1 oder 2, **dadurch gekennzeichnet, dass** das Schüttgut ein Strahlmittel zur Behandlung von Gussteilen ist.

4. Verfahren nach Anspruch 3, **dadurch gekennzeichnet, dass** das Schüttgut aus Stahlkugeln (1) und Sandkörnern (2) besteht.

5. Vorrichtung nach mindestens einem der vorherigen Verfahrensansprüchen, **dadurch gekennzeichnet, dass** sie eine schiefe Ebene (3) zur Führung des Schüttgutes (1, 2), eine Prallplatte (4) zum Trennen des Schüttgutes (1, 2) und mindestens zwei Sammelbehälter zum Sammeln der Schüttgutanteile (1, 2) aufweist.
